# EUROPÄISCHE PATENTSCHRIFT

(11) **EP 2 802 066 B1**
(45) Veröffentlichungstag und Bekanntmachung des Hinweises auf die Patenterteilung: **29.07.2015**
(21) Anmeldenummer: 14158669.3
(22) Anmeldetag: 10.03.2014
(51) Int. Cl.: H02P 29/02, H02M 7/06, H02H 7/16, H02M 5/45

(54) **Schutzbeschaltung für Isolationsschäden durch Ausfall von Zwischenkreiskondensatoren**
Protection circuit against insulation damage due to the failure of link circuit capacitors
Câblage de protection pour dommages d'isolation par la panne de condensateurs de circuit secondaire

(30) Priorität: 10.05.2013 DE 102013104847
(43) Veröffentlichungstag der Anmeldung: 12.11.2014
(73) Patentinhaber: ebm-papst Mulfingen GmbH & Co. KG, 74673 Mulfingen (DE)
(72) Erfinder: Kammleiter, Steffen, 74575 Schrozberg (DE)
(74) Vertreter: Peter, Julian

(56) Entgegenhaltungen:
- EP-A1- 1 858 148
- US-A- 4 568 871
- US-A- 5 682 022

## Beschreibung

Die Erfindung betrifft eine Zwischenkreisschaltung für einen EC-Motor, umfassend mindestens zwei in Reihe geschaltete gleichartige Kondensatoren zum Anschluss einer Kommutierungselektronik eines EC-Motors, zum Nennbetrieb bei einer Nennspannung. Die Erfindung betrifft auch einen EC-Motor mit einer derartigen Zwischenkreisschaltung, sieche US 4 568 871.

Derartige Zwischenkreisschaltungen werden im Allgemeinen aus Platz- und Kostengründen anstatt Zwischenkreisschaltungen mit einem einzelnen größeren Kondensator verwendet.

Zwischenkreisschaltungen von Elektromotoren werden im Rahmen einer Fehlersimulation, die zur Produktzertifizierung und zur Prüfung der Normkonformität im Sinne der Niederspannungsrichtlinie erfolgt, gegen Fehlverhalten überprüft. Dabei werden zum Beispiel auch die Auswirkungen eines Ausfalls eines Kondensators mittels eines Kurzschlusses im ausgefallenen Kondensator überprüft. Durch den Kurzschluss eines Kondensators der Reihenschaltung kommt es zu einer Spannungsüberhöhung über die restlichen in Reihe geschalteten Kondensatoren. Dies führt unter Umständen zu einem Platzen eines Kondensators, wobei sich insbesondere das dadurch frei werdende Elektrolytmaterial des geplatzten Kondensators auf der Leiterplatte der Zwischenkreisschaltung verteilt. Die Leiterplatte der Zwischenkreisschaltung weist eine Basisisolierung zur notwendigen Isolierung zwischen Netzkreis und berührbaren Metallteilen auf, die die Gefahr eines elektrischen Schlages verhindert. Durch Elektrolytansammlungen im Bereich der Basisisolierung der Leiterplatte wird die Kriechwegbildung zwischen dem Netzkreis und berührbaren Metallteilen erhöht, und eine Hochspannungsprüfung im Rahmen der Überprüfung der Konformität mit der Niederspannungsrichtlinie kann nicht mehr bestanden werden. Die Fehlersimulation zeigt somit ein negatives Ergebnis.

Bei bekannten Zwischenkreisschaltungen wird ein Platzen der Kondensatoren zum Beispiel durch zusätzliche in Reihe vor dem Bauteil geschaltete Sicherungen verhindert. Allerdings sprechen vor dem Bauteil angeordnete Sicherungen aufgrund eines überhöhten Stromes an, und somit erst, wenn der platzende Kondensator diesen hohen Strom verursacht, so dass der Kondensator in einigen Fällen immer noch platzen kann. Sicherungen für die hohen Gleichspannungen im Zwischenkreis sind zudem recht groß und verursachen auch relativ hohe Kosten. Alternativ oder zusätzlich wird bei bekannten Zwischenkreisschaltungen eine Verteilung von Elektrolytmaterial durch spezielle Kapselung der Kondensatoren verhindert. Eine Kapselung auf einer Leiterplatte ist aufwändig und verursacht zusätzliche Kosten und kann je nach Schaltung nicht so realisiert werden, dass das Elektrolyt zu keinem anderen Bereich der Schaltung gelangt. Diese Lösungen sind aufwändig, kostenintensiv und benötigen relativ viel Einbauraum.

Der Erfindung liegt die Aufgabe zugrunde, die Konformität einer Zwischenkreisschaltung zur Niederspannungsrichtlinie bei einem Kurzschlusstest eines Kondensators auf eine möglichst einfache, zuverlässige, kostengünstige und platzsparende Weise zu ermöglichen.

Diese Aufgabe wird erfindungsgemäß dadurch gelöst, dass zu jedem in Reihe geschalteten Kondensator jeweils ein Varistor parallel geschaltet ist, wobei alle Varistoren gleichartig ausgebildet sind, und die Kondensatoren und die Varistoren derart dimensioniert sind, dass die Schwellenspannung der Varistoren unterhalb der Durchschlagspannung des jeweils parallel geschalteten Kondensators liegt, und bei Ausfall eines Kondensators oder eines Varistors die Summe der Schwellenspannungen der übrigen Varistoren beziehungsweise zu den übrigen Kondensatoren parallelgeschalteter Varistoren kleiner/gleich der Nennspannung der Zwischenkreisschaltung ist, und die Summe der Schwellenspannungen der in Reihe geschalteten Varistoren größer ist als die Nennspannung der Zwischenkreisschaltung.

Dadurch, dass die Schwellenspannung des Varistors unterhalb der Durchschlagspannung des Kondensators liegt und die Varistoren derart dimensioniert sind, dass bei Ausfall eines Varistors die Summe der Schwellenspannungen der übrigen Varistoren kleiner/gleicl1 der Nennspannung der Zwischenkreisschaltung ist, wird sichergestellt, dass, sobald ein Kondensator oder ein Varistor ausfällt, die Teilnennspannung an den übrigen Varistoren ihre jeweilige Schwellenspannung überschreitet. Hierdurch wird der Widerstand der übrigen Varistoren stark reduziert, so dass die Betriebsspannung am parallel geschalteten Kondensator sofort abfällt und die Durchschlagspannung nicht erreicht werden kann, so dass der Kondensator zuverlässig vor einem Platzen geschützt wird. Da die Summe der Schwellenspannungen der Varistoren größer ist als die Nennspannung der Zwischenkreisschaltung, wird im Nennbetrieb mit allen funktionsfähigen Kondensatoren sichergestellt, dass die Schwellenspannung der Varistoren bei Nennspannung der Zwischenkreisschaltung nicht erreicht wird. Der Widerstand des Varistors ist unterhalb der Schwellenspannung relativ groß, und es liegt im Nennbetrieb eine Teilnennspannung an jedem Kondensator bzw. dazu parallel geschaltetem Varistor an, die kleiner ist als die Schwellenspannung. Die normale Funktionsfähigkeit der Zwischenkreisschaltung wird dadurch sichergestellt. Im Vergleich zu bekannten Sicherungen vor dem Elektrolytkondensator besteht der Vorteil darin, dass der Varistor den Kondensator bereits vor dem Platzen des Kondensators kurzschließt. Zudem sind die Varistoren insbesondere im Vergleich zu Kapselungen günstiger und brauchen weniger Einbauraum, wodurch Platz gespart wird.

Weitere Einzelheiten, Merkmale und vorteilhafte Weiterbildungen der Erfindung ergeben sich aus den im Folgenden beschriebenen und in den Zeichnungen dargestellten Ausführungsbeispielen sowie aus den Unteransprüchen. Es zeigen:
- Fig. 1: ein Blockschaltbild einer erfindungsgemäßen Zwischenkreisschaltung mit Netzeingangsbeschaltung, Sicherung und Gleichrichter im Nennbetrieb,
- Fig. 2: ein Blockschaltbild einer erfindungsgemäßen Zwischenkreisschaltung mit Netzeingangsbeschaltung, Sicherung und Gleichrichter im Fehlerfall.

In den verschiedenen Figuren der Zeichnung sind gleiche Teile stets mit denselben Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels sowie auch unabhängig von den Merkmalskombinationen und Rückbeziehungen der Ansprüche eine erfinderische Bedeutung haben.

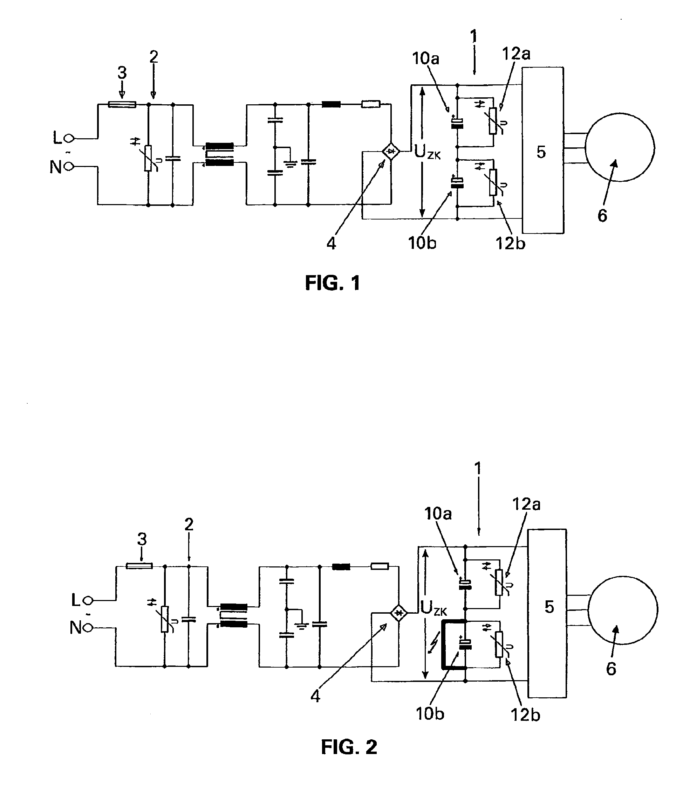

In Fig. 1 ist eine erfindungsgemäße Zwischenkreisschaltung 1 mit einer Netzeingangsbeschaltung 2 mit Sicherung 3 und einem Gleichrichter 4 im Nennbetrieb dargestellt. Die Zwischenkreisschaltung 1 ist über eine Kommutierungselektronik 5 mit einem Motor 6 verbunden. Die Zwischenkreisschaltung 1 wird im Nennbetrieb mit einer Nennspannung UzK betrieben, die von der Netzeingangsschaltung 2 und dem Gleichrichter 4 erzeugt wird. Dabei fließt ein Nennstrom IN, für den die Sicherung 3 der Netzeingangsbeschaltung ausreichend dimensioniert ist. Die Zwischenkreisschaltung weist mehrere in Reihe geschaltete Kondensatoren 10a, 10b auf. Die Kondensatoren 10a, 10b sind zueinander gleichartig ausgebildet, insbesondere mit der gleichen Durchschlagspannung und Kapazität. Dabei ist die Durchschlagspannung derart dimensioniert, dass die Summe der Durchschlagspannungen aller in Reihe geschalteten Kondensatoren 10a, 10b größer ist als die Nennspannung UzK der Zwischenkreisschaltung.

Die dargestellte Ausführungsform der Zwischenkreisschaltung 1 weist zwei Kondensatoren 10a, 10b, insbesondere zwei Elektrolytkondensatoren auf. Grundsätzlich kann eine erfindungsgemäße Zwischenkreisschaltung 1 auch mehr als zwei in Reihe geschaltete Kondensatoren 10a, 10b aufweisen. Im Nennbetrieb liegt bei der dargestellten Ausführungsform an den Kondensatoren 10a, 10b eine Teilnennspannung von UzK/2 an. Die Durchschlagspannung der Kondensatoren 10a, 10b ist jeweils größer als UzK/2.

Zu den in Reihe geschalteten Kondensatoren 10a, 10b ist zu jedem Kondensator 1Oa, 10b jeweils ein Varistor 12a, 12b parallel geschaltet. Dabei sind die Varistoren 12a, 12b zueinander ebenfalls gleichartig dimensioniert, insbesondere mit der gleichen Schwellenspannung, die typisch für den jeweiligen Varistor ist.

Die Varistoren 12a, 12b sind derart dimensioniert, dass die Summe der Schwellenspannungen der in Reihe geschalteten Varistoren 12a, 12b größer als die Nennspannung UzK der Zwischenkreisschaltung 1 ist. Bei der dargestellten Ausführungsform ist die Schwellenspannung der Varistoren 12a, 12, größer als die Teilnennspannung UzK/2. Dadurch ist im Nennbetrieb die Teilnennspannung an den einzelnen Kondensatoren 10a, 10b und den parallelgeschalteten Varistoren 12a, 12b jeweils kleiner als die Schwellenspannung des jeweiligen Varistors 12a, 12b. Der Widerstand des Varistors 12a, 12b ist im Nennbetrieb relativ hochohmig, so dass der Kondensator nicht kurzgeschlossen ist. Dies verhindert, dass der Varistor bereits im Nennbetrieb einen Kurzschluss verursachen würde.

Damit die Kondensatoren 10a, 10b im Fehlerfall geschützt werden, sind die Kondensatoren 10a, 10b und die Varistoren 12a, 12b derart dimensioniert, dass die Schwellenspannung der Varistoren 12a, 12b unterhalb der Durchschlagspannung des jeweils parallel geschalteten Kondensators 10a, 10b liegt, und bei Ausfall eines Kondensators 10a, 10b oder eines Varistors 12a, 12b die Summe der Schwellenspannungen der übrigen Varistoren 12a, 12b beziehungsweise zu den übrigen Kondensatoren 10a, 10b parallelgeschalteter Varistoren 12a, 12b kleiner/gleich der Nennspannung UzK der Zwischenkreisschaltung 1 ist.

Für die dargestellte Ausführungsform gilt: die Durchschlagspannung der Kondensatoren 10a, 10b > Schwellenspannung der Varistoren 12a, 12b, und die Nennspannung UzK ;:::: Schwellenspannung der Varistoren 12a, 12b > UzK/2.

In Fig. 2 ist die gleiche Schaltung beim Fehlerfall, insbesondere einem Kurzschluss in einem der Kondensatoren 10a, 10b, dargestellt. Um die Beeinträchtigung der Isolation durch den Ausfall eines Kondensators 10a, 10b in Reihenschaltung mit einem weiteren Kondensator 10a, 10b zu verhindern, muss ein Platzen des Kondensators 10a, 10b unterbunden werden. Das Platzen des Kondensators 10a, 10b erfolgt nicht unmittelbar nach dem Anlegen der überhöhten Spannung.

Bei einem Ausfall des Kondensators 10b wird der parallel geschaltete Varistor 12b kurzgeschlossen, und die Teilnennspannung an dem übrigen Kondensator 10a und somit auch an dem zu diesem parallel geschalteten Varistor 12a steigt an. Bei dem dargestellten Ausführungsbeispiel könnte die Teilnennspannung an dem Kondensator 10a und dem Varistor 12a bis auf das Doppelte ansteigen. Falls die Teilnennspannung über die Durchschlagspannung des Kondensators 10a ansteigt, bestünde die Gefahr, dass der Kondensator 10a platzt. Da die Schwellenspannung des Varistors 12a jedoch kleiner ist als die Durchschlagspannung des Kondensators 10a, wird der differentielle Widerstand des Varistors 12a abrupt kleiner und schließt den parallel geschalteten Kondensator 10a kurz, so dass die Teilnennspannung am Kondensator 10a vor dem Erreichen seiner Durchschlagspannung abfällt.

Durch den definierten Kurzschluss mittels des Varistors 12a fließt ein überhöhter Strom, so dass die Sicherung 3 der Netzeingangsbeschaltung anspricht und die Gesamtschaltung abgeschaltet wird.

Die Fig.1 und Fig. 2 zeigen eine einphasig gespeiste Elektronik. Die Anordnung der Kondensatoren 10a, 10b und der Varistoren 12a, 12b als Schutzbeschaltung gilt aber auch für mehrphasig gespeiste Elektroniken.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben.

## Patentansprüche

1. Zwischenkreisschaltung (1) für einen EC-Motor (6), umfassend mindestens zwei in Reihe geschaltete gleichartige Kondensatoren (10a, 10b) zum Anschluss einer Kommutierungselektronik (5) eines EC-Motors (6) zum Nennbetrieb bei einer Nennspannung(Uzk),
**dadurch gekennzeichnet, dass** zu jedem in Reihe geschalteten Kondensator (10a, 10b) jeweils ein Varistor (12a, 12b) parallel geschaltet ist, wobei alle Varistoren (12a, 12b) gleichartig ausgebildet sind, und die Kondensatoren (10a, 10b) und die Varistoren (12a, 12b) derart dimensioniert sind, dass die Schwellenspannung der Varistoren (12a, 12b) unterhalb der Durchschlagspannung des jeweils parallel geschalteten Kondensators (10a, 10b) liegt, und bei Ausfall eines Kondensators (10a, 10b) oder eines Varistors (12a, 12b) die Summe der Schwellenspannungen der übrigen Varistoren (12a, 12b) beziehungsweise zu den übrigen Kondensatoren (10a, 10b) parallelgeschalteter Varistoren (12a, 12b) kleiner/gleich der Nennspannung (UzK) der Zwischenkreisschaltung (1) ist, und die Summe der Schwellenspannungen der in Reihe geschalteten Varistoren (12a, 12b) größer ist als die Nennspannung (UzK) der Zwischenkreisschaltung (1) **dadurch gekennzeichnet dass** ferner eine Sicherung (3) vorgesehen ist und mittels eines definierten Kurzschlussstromes mittels des Varistors ein gezielt überhöhter Strom fließt, so dass die Sicherung (3) anspricht und die Gesamtschaltung abgeschaltet wird, sobald eine Teilnennspannung der Nennspannung (UzK) an einem Kondensator (10a, 10b) über die Schwellenspannung des parallel geschalteten Varistors (12a, 12b) ansteigt.

2. Zwischenkreisschaltung nach Anspruch 1, **dadurch gekennzeichnet, dass** im Falle,
wenn die Teilnennspannung an einem Kondensator (10a, 10b) über die Schwellenspannung des Varistors (12a, 12b) ansteigt, der differentielle Widerstand des Varistors (12a, 12b) abrupt kleiner wird und den parallel geschalteten Kondensator (10a, 10b) kurzschließt, so dass die Teilnennspannung am Kondensator (10a, 10b) vor dem Erreichen seiner Durchschlagspannung abfällt.

3. EC-Motor mit einer Zwischenkreisschaltung gemäß einem der Ansprüche 1-3.

## Claims

1. Intermediate protection circuit (1) for a EC-motor (6) comprising at least identical capacitors (10a, 10b) connected in series for connecting a commutation (5) of an EC motor (6) for nominal operation at a rated voltage (Uzk).
wherein for each capacitor (10a, 10b) connected in series a respective varistor (12a, 12b) is connected in parallel, whereby all varistors (12a, 12b) are of identical design, and the capacitors (10a, 10b) and the varistors (12a, 12b) are dimensioned such that the threshold voltage of the varistors (12a, 12b) is below the breakdown voltage of each parallel capacitor (10a, 10b), and in case of a failure of a capacitor (10a, 10b) or a varistor (12a 12b) the sum of the threshold voltages of the other varistors (12a, 12b) respectively to the remaining capacitors (10a, 10b) of parallel connected varistors (12a, 12b) is less than or equal to the nominal voltage (UZK) of the intermediate protection circuit (1), and the sum of threshold voltages of the varistors (12a, 12b) connected in series is greater than the nominal voltage (UZK) of the intermediate protection circuit (1) **characterized in that** a fuse (3) is further comprised and by means of a defined short-circuit current flows a selectively excessive current by means of the varistor, so that the fuse (3) responds and the overall circuit is switched off as soon as a part of the rated voltage of the rated voltage (UZK) at a capacitor (10a, 10b) exceeds the threshold voltage of the varistor (12a, 12b) connected in parallel.

2. Intermediate protection circuit according to claim 1, **characterized in that** in the case when the part of rated voltage at a capacitor (10a, 10b) exceeds the threshold voltage of the varistor (12a, 12b), the differential resistance of the varistor (12a, 12b) is abruptly decreasing and shorts the capacitor (10a, 10b) connected in parallel, so that the part of the nominal rated voltage at the capacitor (10a, 10b) falls before reaching its breakdown voltage.

3. EC motor with an intermediate protection circuit according to one of claims 1-3.

## Revendications

1. Circuit de protection intermédiaire (1) pour un EC-moteur (6) comprenant au moins les condensateurs identiques (10a, 10b) connectés en série pour connecter une commutation (5) d'un EC-moteur (6) pour un fonctionnement à une tension nominale classé (Uzk).
dans lequel une varistance (12a, 12b) est connectée respectivement en parallèle à chaque condensateur (10a, 10b) connectés en série, de sorte que toutes les varistances (12a, 12b) sont de conception identique, et que les condensateurs (10a, 10b) et les varistances (12a, 12b) sont dimensionnés de telle sorte que la tension de seuil des varistances (12a, 12b) est inférieure à la tension de claquage de chaque condensateur parallèle (10a, 10b), et en cas de défaillance d'un condensateur (10a, 10b) ou d'un varistance (12a 12b) la somme des tensions de seuil des autres varistances (12a, 12b) respectivement aux autres varistances (12a, 12b) connectés en parallèle aux condensateurs (10a, 10b) est inférieure ou égale à la tension nominale (UZK) du circuit de protection intermédiaire (1), et la somme des tensions de seuil des varistances (12a, 12b) connectés en série est supérieure à la tension nominale (UZK) du circuit de protection intermédiaire (1), **caractérisé en ce qu'**un fusible (3) est prévu en outre et par un courant de court-circuit par l'intermédiaire de la varistance circule un courant défini de manière sélective excessive, de telle sorte que le fusible (3) répond et le circuit global est mis hors tension dès qu'une partie de la tension nominale de la tension nominale (UZK) à un condensateur (10a, 10b) dépasse la tension de seuil de la varistance (12a, 12b) connectés en parallèle.

2. Circuit de protection intermédiaire selon la revendication 1, **caractérisé en ce que** dans le cas où la partie de la tension nominale à un condensateur (10a, 10b) dépasse la tension de seuil de la varistance (12a, 12b), la résistance différentielle de la varistance (12a, 12b) est brusquement diminué et court-circuite le condensateur
(10a, 10b) connectés en parallèle, de sorte que la partie de la tension nominale du condensateur (10a, 10b) tombes avant d'atteindre sa tension de claquage.

3. EC-moteur avec un circuit de protection intermédiaire selon l'une des revendications 1 à 3.
